(19)

Europäisches Patentamt

European Patent Office

Office européen des brevets

(11)  **EP 2 466 803 B1**

(12)  **EUROPÄISCHE PATENTSCHRIFT**

(45) Veröffentlichungstag und Bekanntmachung des Hinweises auf die Patenterteilung:
**17.04.2013 Patentblatt 2013/16**

(51) Int Cl.:
***H04L 12/403*** (2006.01)

(21) Anmeldenummer: **10195057.4**

(22) Anmeldetag: **15.12.2010**

(54) **Verfahren zur Datenübertragung in einem Automatisierungssystem unter Verwendung von Dynamic Frame Packing**

Method for data transmission in an automation system using dynamic frame packing

Procédé de transmission de données dans un système d'automatisation en utilisant le Dynamic Frame Packing

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**20.06.2012 Patentblatt 2012/25**

(73) Patentinhaber: **Siemens Aktiengesellschaft 80333 München (DE)**

(72) Erfinder: **Biehler, Georg 90453, Nürnberg (DE)**

(56) Entgegenhaltungen:
**EP-A1- 2 028 797         EP-A1- 2 109 259**
**DE-A1-102007 004 044**

- **Robert Wilmes, Phoenix Contact Electronics: "Dynamic Frame Packing (DFP) verleiht Profinet Flügel", WEKA FACHMEDIEN GmbH, elektroniknet.de , 29. April 2009 (2009-04-29), XP002635338, Gefunden im Internet: URL:http: //www.elektroniknet.de/automation /technik-know-how/feldebene/article/1374/0 /Dynamic_ Frame_Packing_DFP_verleiht_Profin et_ Fluegel/?type=99 [gefunden am 2011-05-03]**

EP 2 466 803 B1

**Beschreibung**

Die Erfindung betrifft ein Verfahren zur automatisierten Datenübertragung in einem Automatisierungssystem unter Verwendung von Dynamic Frame Packing, ein Computerprogrammprodukt und ein Feldgerät zur Datenübertragung in einem Automatisierungssystem.

Um in Automatisierungssystemen die Übertragungsgeschwindigkeit von Daten von Feldgeräten zu Controllern zu erhöhen, wurde das Konzept des Dynamic Frame Packing (DFP) eingeführt. Eine Datenübertragung erfolgt dabei unter Verwendung von Containerframes. Endgeräte, welche einer Packgruppe zugeordnet sind, übertragen dabei ihre Daten innerhalb dieses besagten Containerframes. Dadurch ergibt sich der Vorteil, dass der Overhead von verwendeten Ethernetframes für eine gegebene Übertragung nur einmalig zum Tragen kommt, da aufgrund des Containerframes lediglich zum Beispiel eine Präambel, ein Startframe Delimiter und ein Header zum Einsatz kommt. Dies ermöglicht, die Packdichte zu erhöhen, sodass innerhalb eines Taktzykluses eine Datenübertragung durch eine Vielzahl von Feldgeräten stattfinden kann, wobei die Aktualisierungsraten bezüglich der Übertragung signifikant erhöht ist im Vergleich zu einer Datenübertragung, welche DFP nicht verwenden würde.

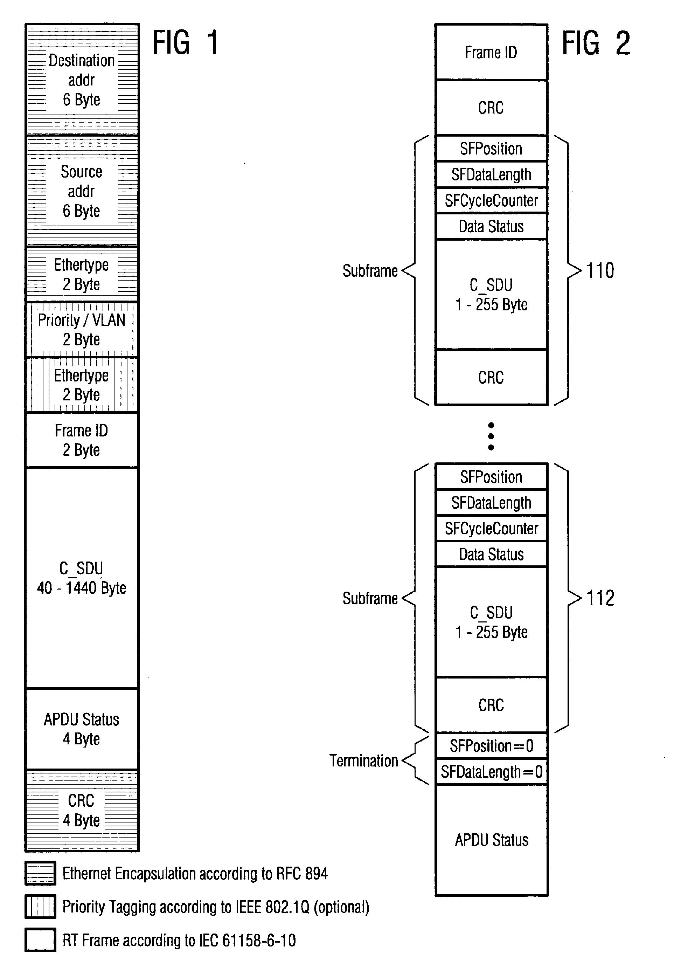

Die FIG 1 zeigt die Struktur eines typischen Echtzeitframes, wobei dieser Frame selbst für Ethernet-Übertragungen entsprechend RFC894 unter Verwendung der Elemente Zieladresse, Quelladresse, Ethertyp und CRC gekapselt ist. Im Falle des Verwendens von Priority Tagging entsprechend IEEE 802.1Q mit der Ethertyp auf 0x8100 gesetzt, gefolgt von einem Prioritäts-/VLAN-Feld, gefolgt von einem zweiten Ethertyp, welcher auf 0x8892 gesetzt ist und welcher einen Echtzeitframe anzeigt.

Die Frame-ID wird zur Kennzeichnung des Frames selber verwendet, wobei der C_SDU dazu bestimmt ist, die IO-Daten der Feldgeräte zu transportieren und der APDU-Status den Status des Frames angibt.

Der C_SDU kann dabei so strukturiert sein, dass er entweder die IO-Daten eines einzelnen Feldgerätes trägt oder dass er die IO-Daten mehrerer Feldgeräte trägt. Im letzteren Fall trägt ein Teil des C SDU (genannt "Teilframe") den Inhalt eines bestimmten Feldgerätes - der Frame ist in diesem Fall unterteilt in mehrere Teilframes.

Der Grund für die Verwendung einer Unterteilung in Frames ist die Minimierung der benötigten Bandbreite und konsequenter Weise die Optimierung der Leistung. Wie in FIG 1 gezeigt, beträgt der Overhead eines Frames, d.h. die zu transportierenden Bytes außerdem dem C SDU 28 Bytes. Da jedoch zusätzlich der InterFrameGap 12 Bytes beträgt, die Präambel 7 Bytes beträgt und der Start Frame Delimiter 1 Byte beträgt und diese zusätzlich berücksichtigt werden müssen, summiert sich der Overhead eines Frames zu 48 Bytes (oder 42 Bytes wenn die Präambel auf 1 Byte verkürzt wird). Wenn der C SDU zusätzlich kleiner als 40 Bytes ist, muss die Differenz zusätzlich hinzugefügt werden.

Damit ist ersichtlich, dass die Verwendung von unterteilten Frames die benötigte Bandbreite durch Kombination von Teilframes 110 und 112 reduziert, da, wie in FIG 2 gezeigt, der Overhead eines Teilframes lediglich 6 Bytes beträgt. Durch Kombination mehrerer Teilframes in einem einzelnen Frame wird somit der Overhead für den verwendeten Frame nur einmal fällig.

Jedem der besagten Teilframes 110 und 112 ist eine Position, ein Kontrollbit, eine Datenlänge, welche die Länge des C_SDU beschreibt, ein Cycle Counter, ein Datenstatus und ein CRC zugeordnet. Bei der Position handelt es sich dabei um einen eindeutigen Kennzeichner für einen gegebenen Teilframe, wobei die Liste der Teilframes durch einen speziellen Teilframe mit der Positionsnummer 0 abgeschlossen wird.

Der Kontrollbit dient dazu, anzugeben, ob der CRC und Cycle Counter des Teilframes ignoriert werden soll oder nicht.

Der Datenstatus eines Teilframes gibt den Datenstatus des Teilframes an. Der Datenstatus innerhalb des APDU-Status des Frames gibt den Datenstatus des Frames an. Im Falle dessen der Frame aus Teilframes besteht, kann der Datenstatus des Frames ignoriert werden. Ferner ist es hilfreich, den Datenstatus des Frames einem statischen Wert zuzuordnen.

Aus EP 2 028 797 A1 ist ein Verfahren zur Datenübertragung auf einem seriellen Datenbussystem bekannt, bei dem ein Busteilnehmer, der ein für ihn bestimmtes Datentelegramm erhalten hat, abhängig von einem Kriterium Daten in dieses oder ein anderes, neu erzeugtes Datentelegramm einfügt.

Aus DE 10 2007 004 044 A1 ist ein Verfahren zur Übertragung von Daten zwischen einer Steuereinrichtung und mehreren Feldgeräten auf einem Datenbus mit Profinet-Protokoll bekannt, bei dem die Daten in einem in Datenfelder unterteilten Summenrahmen übertragen werden.

Aus EP 2 109 259 A1 ist ein Verfahren zur Prozesssteuerung bekannt, bei dem Daten zwischen einem Ethernet-Netzwerk und einem unterlagerten Bussystem über einem Buskoppler ausgetauscht werden. Dabei ist der Buskoppler mit beiden Netzwerken verbunden und nimmt eine Umsetzung der unterschiedlichen Datenformate zwischen beiden Bussystemen vor. Zur Vermeidung des großen Overheads des Ethernet-Protokolls wird in dem unterlagerten Subnetz ein spezielles, angepaßtes Protokoll eingesetzt. Das interne Datentelegramm läuft als Summenrahmen in dem ringförmigen Subnetz um. Für jeden Busteilnehmer des Subnetzes ist innerhalb eines Summenrahmens ein Datenblock fest und nicht variabel zugeordnet, innerhalb dessen der Busteilnehmer Daten empfangen oder senden kann. Da einerseits mittels des Verfahrens die Busteilnehmer eine Echtzeit-Steuerung vornehmen sollen und da je nach örtlicher Lage der Subbus-Teilnehmer unterschiedliche zeitliche Verzögerungen in dem Subnetz entstehen können, ist eine sogenannte Parametrisierung der sogenannten Latch-in- und Latch-out-Zeiten vorgesehen. Diese Maßnahme dient dazu, sicherzustellen, dass alle Busteilnehmer des Sub-Bussystems zur demselben Zeitpunkt Daten an den ihnen jeweils zugeordneten lokalen Prozeß senden oder von diesem empfangen, unabhängig davon, wann sie den Summenrahmen vom Bus-Master empfangen. Somit können die unterschiedlichen Verzögerungen auf dem Sub-Bussystem ausgeglichen werden, so dass alle Busteilnehmer in dem Echtzeitprozeß zeitgleich bzw. zu gewünschten Zeitpunkten agieren.

Der Erfindung liegt die Aufgabe zugrunde, ein Verfahren zur Datenübertragung in einem Automatisierungssystem, ein Computerprogrammprodukt und ein Feldgerät zur Datenübertragung in einem Automatisierungssystem vorzuschlagen.

Die der Erfindung zugrunde liegenden Aufgaben werden durch die Merkmale der unabhängigen Patentansprüche gelöst. Bevorzugte Ausführungsformen der Erfindung sind in den abhängigen Patentansprüchen angegeben.

Es wird ein Verfahren zur Datenübertragung in einem Automatisierungssystem von einem zweiten Feldgerät über ein erstes Feldgerät zu einem Empfänger geschaffen, wobei das Verfahren die folgenden Schritte am ersten Feldgerät umfasst:

- Erzeugung eines ersten Teildatenframes, wobei der erste Teildatenframe Prozessdaten des ersten Feldgerätes aufweist,

- Empfang eines zweiten Datenframes von dem zweiten Feldgerät, wobei der zweite Datenframe einen zweiten Teildatenframe mit Prozessdaten des zweiten Feldgeräts aufweist,

- zeitrichtiges Senden eines ersten Datenframes umfassend den ersten und den zweiten Teildatenframe durch Dynamic Frame Packing (DFP) an den Empfänger.

Dabei wird durch das zeitrichtige Senden im Fall, dass der zweite Teildatenframe spätestens nach Senden des ersten Teildatenframes unmittelbar an den ersten Teildatenframe angehängt werden kann, das Senden des ersten Datenframes um einen Zeitwert verschoben, wobei der Zeitwert so berechnet wird, dass unmittelbar nach dem Senden des ersten Teildatenframes der zweite Teildatenframe unmittelbar an den ersten Teildatenframe anhängbar wird.

Bei dem oben besagten Empfänger kann es sich zum Beispiel um einen Controller des Automatisierungssystems, also einen sogenannten IO Controller (IOC) handeln. Beim Empfänger kann es sich jedoch auch um ein weiteres Feldgerät handeln, welches dem ersten Feldgerät nachgeschaltet ist.

Ausführungsformen der Erfindung haben den Vorteil, dass aufgrund der Berechnung eines optimalen Absendezeitpunkts des ersten Datenframes mit dem nahtlosen Aneinanderfügen des ersten und zweiten Teildatenframes eine Echtzeitdatenübertragung in dem Automatisierungssystem gewährleistet wird.

Vereinfacht ausgedrückt wird der Beginn des Sendezeitpunkts des ersten Datenframes so lange hinausgezögert, dass der zweite Teildatenframe - sobald dieser am ersten Feldgerät für Dynamic Frame Packing zur Verfügung steht - an den im ersten Datenframe enthaltenen ersten Datenframe nahtlos angefügt werden kann. Sobald also der zweite Teildatenframe für Dynamic Frame Packing am ersten Feldgerät zur Verfügung steht, wird der zweite Teildatenframe durch Anfügen an den in diesem Augenblick bereits im Sendevorgang befindlichen ersten Teildatenframe angefügt. Durch das zeitrichtige Senden wird also der zweite Teildatenframe unmittelbar an den ersten Teildatenframe angehängt, wobei zeitrichtig bedeutet, dass der zweite Teildatenframe rechtzeitig an den ersten Teildatenframe angehängt werden kann - es entsteht keine Lücke in Form einer Wartezeit, welche nach Aussenden des ersten Teildatenframes mittels eines sogenannten "Lückenframes" aufgefüllt werden muss. Dabei muss der zweite Teildatenframe noch nicht vollständig empfangen sein, d.h. dieser kann dynamisch an den ersten ausgehenden Teildatenframe bereits während dem Empfang (Eingang) des zweiten Teildatenframes angehängt werden.

Nach einer Ausführungsform der Erfindung geht in die Berechnung des Zeitwerts die Übertragungsdauer des zweiten Datenframes von dem zweiten zu dem ersten Feldgerät ein. Beispielsweise umfasst die Übertragungsdauer eine Zeitverzögerung zum Senden des zweiten Datenframes durch das zweite Feldgerät und/oder eine Zeitverzögerung beim Empfangen des zweiten Datenframes durch das erste Feldgerät und/oder eine Zeitverzögerung durch die Kabellaufzeit des zweiten Datenframes zwischen dem zweiten und dem ersten Feldgerät.

Dadurch kann in exakter Weise festgestellt werden, inwiefern das Senden des ersten Datenframes zeitlich verschoben werden muss, um den Hardwaregegebenheiten bezüglich des ersten und zweiten Feldgeräts Rechnung zu tragen. Außerdem wird der räumliche Abstand zwischen dem ersten und zweiten Feldgerät durch die Berücksichtigung der Kabellaufzeit berücksichtigt - im Falle dessen nämlich, dass das erste und zweite Feldgerät weit voneinander entfernt sind, wird ein entsprechendes Signal zwischen dem ersten und zweiten Feldgerät einen längeren Zeitraum benötigen, um ausgehend vom zweiten Feldgerät am ersten Feldgerät anzukommen. All dies wird in optimaler Weise durch das erfindungsgemäße Verfahren berücksichtigt.

Nach einer weiteren Ausführungsform der Erfindung geht in die Berechnung des Zeitwerts die Vorlaufzeit zur Durchführung des Dynamic Frame Packing am ersten Feldgerät ein. Damit wird auch hier die Hardware in Form des ersten Feldgeräts bei der Berechnung des Zeitwerts berücksichtigt. In optimaler Weise kann damit der zweite Teildatenframe an den ersten Teildatenframe angehängt werden.

Nach einer weiteren Ausführungsform der Erfindung geht in die Berechnung des Zeitwerts der zeitliche Versatz der lokalen Zeitsysteme im ersten und zweiten Feldgerät, der sogenannte "Peer-to-Peer-Jitter", ein.

Nach einer weiteren Ausführungsform der Erfindung wird der erste Datenframe über ein weiteres Feldgerät an den Empfänger gesendet, wobei eine Datenübertragung aller Feldgeräte zeitlich synchronisiert stattfindet, wobei für alle Feldgeräte ein globaler und/oder ein individueller lokaler Sendestart-Offset als Zeitverzögerung vorgegeben ist, wobei ein Beginn der Datenübertragung in einem Feldgerät gegenüber dem Beginn der Datenübertragung an einem benachbarten Feldgerät zumindest um den Sendestart-Offset verzögert ist, wobei das Senden des ersten Datenframes durch das erste Feldgerät frühestens nach Ablauf des Sendestart-Offsets stattfindet. In anderen Worten kann damit entweder in globaler Weise oder individuell für jedes Feldgerät ein geeigneter Wert einer Zeitverzögerung angegeben werden, nach welcher das jeweilige Feldgerät in Bezug auf ein benachbartes Feldgerät mit dem Sendevorgang beginnt.

Nach einer weiteren Ausführungsform der Erfindung wird im Fall, dass die Summe aus Übertragungsdauer des zweiten Datenframes von dem zweiten zu dem ersten Feldgerät und/oder dem zeitlichen Versatz der lokalen Zeitsysteme im ersten und zweiten Feldgerät und/oder der Vorlaufzeit zur Durchführung des Dynamic Frame Packing im ersten Feldgerät größer ist als die Zeitdauer zum Senden des gesamten ersten Teildatenframes, wird der Zeitwert negativ. Die Zeitdauer zum Senden des gesamten ersten Teildatenframes richtet sich dabei nach dessen Größe. Je größer der erste Teildatenframe ist, desto mehr Zeit wird benötigt, um individuelle Bits des Teildatenframes sequenziell an den Empfänger zu übermitteln.

Nach einer weiteren Ausführungsform der Erfindung errechnet sich der Zeitwert aus der Summe von Übertragungsdauer des zweiten Datenframes von dem zweiten zu dem ersten Feldgerät, zeitlichen Versatz zu lokalen Zeitsystem im ersten und zweiten Feldgerät, Vorlaufzeit zur Durchführung des Dynamic Frame Packing im ersten Feldgerät und Zeitwert, über welchen das Senden des zweiten Datenframes am zweiten Feldgerät zum Zweck des zeitrichtigen Sendens verzögert wurde, abzüglich der Zeitdauer zum Senden des gesamten ersten Teildatenframes. Die besagten Zeitparameter dieser Summe können dabei in ihrer Gesamtheit in die Berechnung des Zeitwerts eingehen. Möglich ist jedoch auch, dass nur einzelne dieser Parameter in die Berechnung des Zeitwerts eingehen. Letzeres kann insbesondere dann sinnvoll sein, wenn einzelne Parameter größenmäßig vernachlässigbar sind.

Nach einer weiteren Ausführungsform der Erfindung wird im Fall dessen der errechnete Zeitwert kleiner ist als der Sendestart-Offset des ersten Feldgeräts der Sendestart-Offset des ersten Feldgeräts als der Zeitwert verwendet.

In einem weiteren Aspekt betrifft die Erfindung ein Computerprogrammprodukt mit von einem Prozessor ausführbaren Instruktionen (ASIC) zur Durchführung der Verfahrensschritte, wie sie oben erwähnt wurden.

In einem weiteren Aspekt betrifft die Erfindung ein erstes Feldgerät, wobei das erste Feldgerät zum Empfang von Daten von einem zweiten Feldgerät und zum Senden von Daten an einen Empfänger ausgebildet ist, wobei das erste Feldgerät zur Durchführung der folgenden Schritte ausgebildet ist:

- Erzeugung eines ersten Teildatenframes, wobei der erste Teildatenframe Prozessdaten des ersten Feldgerätes aufweist,

- Empfang eines zweiten Datenframes von dem zweiten Feldgerät, wobei der zweite Datenframe einen zweiten Teildatenframe mit Prozessdaten des zweiten Feldgeräts aufweist,

- zeitrichtiges Senden eines ersten Datenframes umfassend den ersten und den zweiten Teildatenframe durch Dynamic Frame Packing (DFP) an den Empfänger,

wobei durch das zeitrichtige Senden, im Fall, dass der zweite Teildatenframe nicht spätestens nach Senden des ersten Teildatenframes unmittelbar an den ersten Teildatenframe angehängt werden kann, dass das Senden des ersten Datenframes um einen Zeitwert verschoben wird, wobei der Zeitwert so berechnet wird, dass unmittelbar nach dem Senden des ersten Teildatenframes der zweite Teildatenframe unmittelbar an den ersten Teildatenframe anhängbar wird.

Im Folgenden werden bevorzugte Ausführungsformen der Erfindung anhand der Zeichnungen näher erläutert. Es zeigen:

FIG 3      den Ablauf eines Verfahrens zur Datenübertragung unter Verwendung von DFP,

FIG 4      den Ablauf eines Verfahrens zur Datenübertragung unter Verwendung von DFP,

FIG 5      eine schematische Darstellung der Funktionsweise von DFP,

FIG 6     eine schematische Darstellung von DFP mit Anpassung der Größe von Teildatenframes,

FIG 7     eine schematische Darstellung der Durchführung von DFP unter Verwendung von zeitrichtigem Senden.

Im Folgenden werden einander ähnliche Elemente mit den gleichen Bezugzeichen gekennzeichnet.

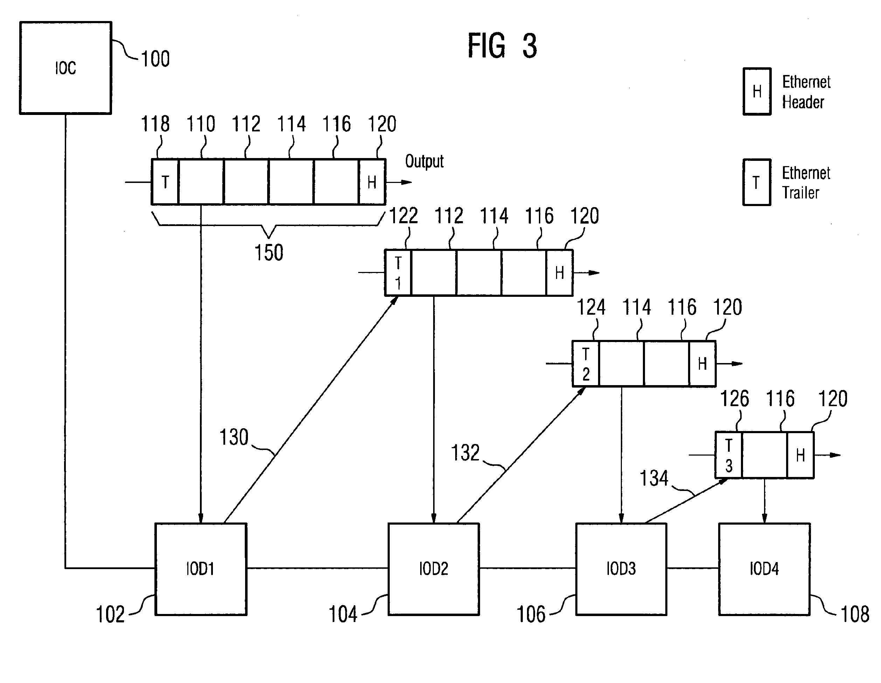

Die FIG 3 zeigt ein Verfahren zur Datenübertragung unter Verwendung von DFP. Im Folgenden wird davon ausgegangen, dass in einem Automatisierungssystem neben einem Controller (IOC) 100 vier Feldgeräte (IO devices) 102, 104, 106 und 108 topologisch hintereinander angeordnet sind. Eine Datenübertragung unter Verwendung von Dynamic Frame Packing erfolgt dabei ausgehend von IOC 100 zu den Feldgeräten so, dass der IOC 100 ein Paket an das Feldgerät 102 übermittelt, wobei dieses Paket mehrere Teilframes 110, 112, 114 und 116 aufweist, welche jeweils Nutzerdaten für die Feldgeräte 102, 104, 106 bzw. 108 beinhalten. Der zur Datenübertragung verwendete Container 150 weist neben den Teilframes 110 - 116 auch noch einen Ethernet Header 120 und einen Ethernet Trailer 118 auf.

Nach Empfang des Containers 150 durch das Feldgerät 102 entnimmt das Feldgerät 102 den für ihn bestimmten Teildatenframe 110 und schickt daraufhin in dem mit dem Bezugzeichen 130 gekennzeichneten Schritt ein neues Paket an das Feldgerät 104. Dieses neue Paket weist jedoch nun nicht mehr den Teildatenframe 110 auf, sondern lediglich noch die Teildatenframes 112, 114 und 116, welche für die topologisch nachfolgenden Feldgeräte 104 - 108 bestimmt sind. Der Ethernet Header 120 wird unverändert übernommen, wohingegen ein neuer Ethernet Trailer 122 erzeugt wird und an das Datenpaket angehängt wird.

Nach Empfang dieses so erzeugten Datenpakets durch das Feldgerät 104 entnimmt das Feldgerät 104 den für ihn bestimmten Teildatenframe 112 und erzeugt in Schritt 132 wiederum ein neues Paket, wobei dieses nun nur noch die Teildatenframes 114 und 116 sowie den Ethernet Header 120 aufweist. Ferner weist das so erzeugte Paket auch noch einen neuen Ethernet Trailer 124 auf.

Dieses so erzeugte Paket wird daraufhin wiederum von Feldgerät 106 empfangen, welches den Teildatenframe 114 entnimmt und in Schritt 134 den übrig bleibenden Teildatenframe 116 zusammen mit dem Ethernet Header 120 und einem neuen Ethernet Trailer 126 an das letzte Feldgerät 108 übermittelt.

Damit kann zusammengefasst werden, dass jedes IO-Gerät (jedes Feldgerät 102, 104, 106 und 108) in aufeinander folgender Reihenfolge ausgehend vom Controller 100 mit Frames versorgt wird, wobei nach jedem Empfang des Pakets das besagte Feldgerät das Paket in veränderter Form an das nachgeschaltete Feldgerät weiterleitet.

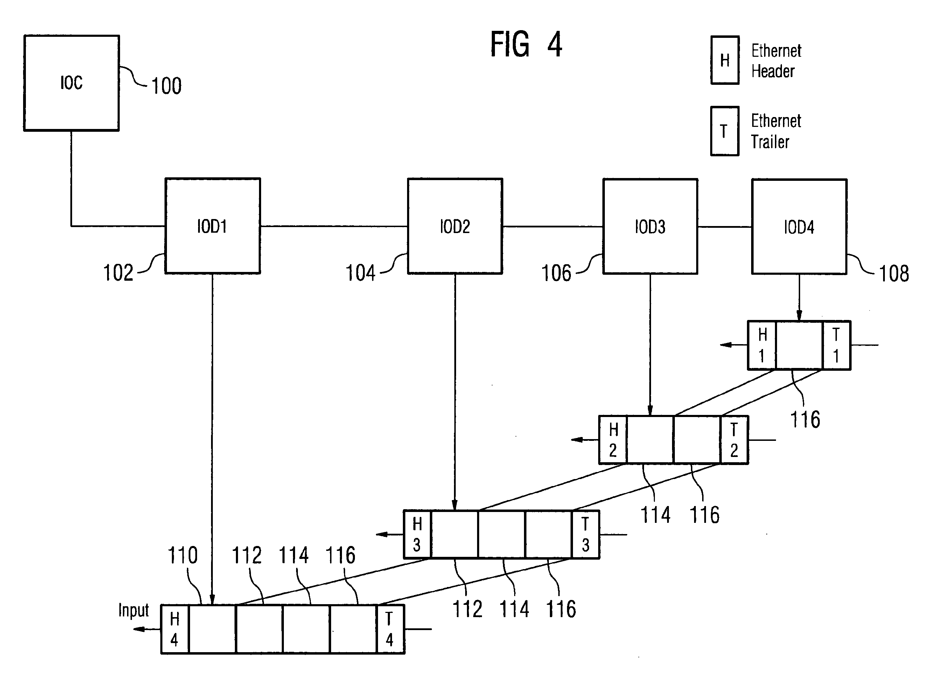

Die FIG 4 zeigt ebenfalls den Ablauf eines Verfahrens zur Datenübertragung unter Verwendung von DFP, wobei jedoch im Gegensatz zur Darstellung in FIG 3 eine Datenübertragung durch das Feldgerät 108 initiiert wird. Das Feldgerät 108 sendet einen Frame mit Ethernet Header und Ethernet Trailer sowie einen dazwischen eingebetteten Teildatenframe 116 an das Feldgerät 106, welches daraufhin seinem Teildatenframe 114 den Teildatenframe 116 anhängt. Das so erzeugte Datenpaket wird an das Feldgerät 104 übermittelt, welches wiederum seinen Teildatenframe 112 dem Paket hinzufügt und den so erzeugten Frame an das Feldgerät 102 übermittelt. Das Feldgerät 102 hängt seinen Teildatenframe 110 an den Teildatenframe 112 des Feldgeräts 104 an und leitet den so erzeugten Frame an beispielsweise den Controller 100 weiter.

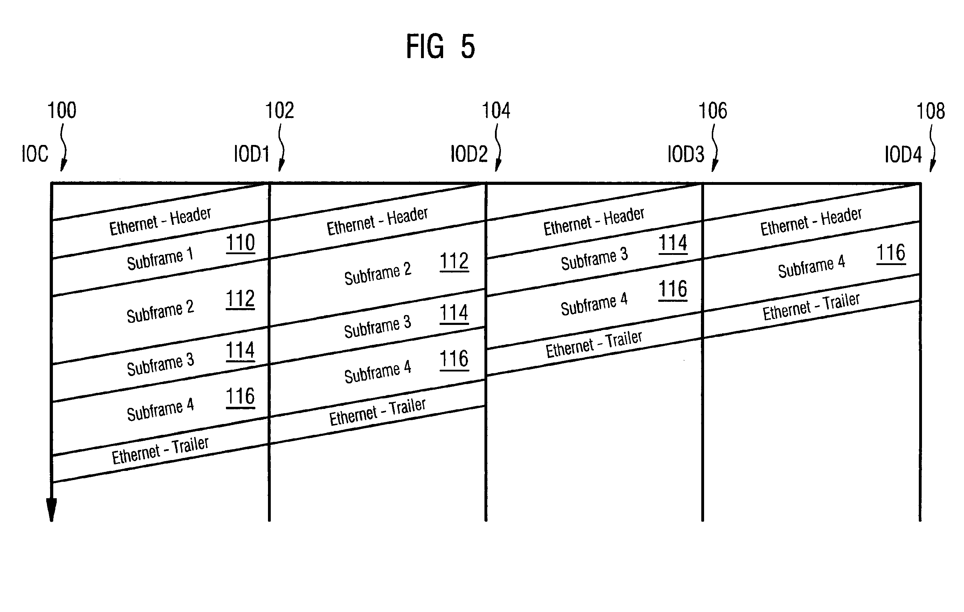

Die FIG 5 zeigt schematisch, wie Dynamic Frame Packing zeitlich gesehen durchgeführt wird. Die Abszisse stellt dabei die Wegstrecke dar, welche von Datenpaketen durchlaufen wird, wohingegen auf der Ordinate die zur Übertragung benötigte Zeit gezeichnet ist.

Die schematische Darstellung von DFP in FIG 5 entspricht dabei der Darstellung der DFP-Datenübertragung in FIG 4. FIG 5 zeigt dabei ideale Voraussetzungen für Dynamic Frame Packing, was bedeutet, dass die Teildatenframes ausgehend vom rechten Feldgerät hin zum Controller jeweils so rechtzeitig am jeweils nachgeordneten Feldgerät ankommen, sodass der so empfangene Teildatenframe problemlos und ohne Lücke an den Teildatenframe dieses jeweiligen Feldgeräts angefügt werden kann. So erreicht zum Beispiel in Figur 5 der Teildatenframe 116 das Feldgerät 106 bevor dieses den Teildatenframe 114 vollständig gesendet hat.

Im Falle dessen, dass das Feldgerät 106 den Teildatenframe 114 zeitlich verzögert aussendet, kann aus diesem Verzögerungswert (FSO, FrameSendOffset) eine lokale Zeitdauer bestimmt werden, aus welcher hervorgeht, wann das Senden des Teildatenframes 114 abgeschlossen ist. Diese Zeit ergibt sich dabei aus der Größe des Teildatenframes 114, das heißt aus dem Verhältnis zwischen dem ersten Byte nach der Prüfsumme des Teildatenframes und dem ersten Byte des beim Versenden verwendeten eigentlichen Frames, das heißt dem ersten Byte der Zieladresse, multipliziert mit einem System bestimmten Wert, beispielsweise 80 ns. Dies ergibt den letzten Zeitpunkt, zu welchem der Teildatenframe 116 am Feldgerät 106 zum Zwecke von DFP bereitstehen muss. Anderweitig würde sich ein sogenannter "DFP frame late error", also ein Fehler, ergeben.

Es sei angemerkt, dass im vorliegenden Fall der Ethernet Header ohne Weiteres ignoriert werden kann, da dieser sowohl durch das Feldgerät 108 als auch durch das Feldgerät 106 übermittelt wird. Da außerdem ein FSO grundsätzlich auf den sogenannten Startframe Delimitor bezogen ist, ist es irrelevant, ob eine kurze oder eine lange Präambel an einem bestimmten Empfangsport des Feldgeräts 106 (Tx Port) verwendet wird.

Aus diesem Grund gilt die folgende Ungleichung:

$$FSO_{IODn} + MaxLineRxDelay + MaxDFP\_Feed \leq FSO_{IODn-1} + SubframeSize_{IODn-1} - PeerToPeerJitter$$

Die linke Seite dieser Ungleichung beschreibt, dass der Teildatenframe n übertragen wird durch das Feldgerät n (IODn) zum Zeitpunkt $FSO_{IODn}$, wobei der Teildatenframe n die Signalleitung zwischen Feldgerät n und n-1 (IODn und IODn-1) durchlaufen muss. Aus diesem Grund wird MaxLineRxDelay, also die Zeit der Übertragungsdauer des Datenframes zwischen den Feldgeräten, hinzugefügt. Diese Übertragungsdauer kann dabei nebst einer Zeitverzögerung durch die Kabellaufzeit von Datenframes zwischen den Feldgeräten auch eine Zeitverzögerung (Tx Delay) zum Senden des Datenframes durch ein Feldgerät und/oder eine Zeitverzögerung (Rx Delay) beim Empfangen des Datenframes durch ein Feldgerät umfassen.

MaxDFP Feed beschreibt die Vorlaufzeit zur Durchführung des Dynamic Frame Packing am empfangenden Feldgerät. MaxDFP Feed beschreibt die Vorlaufzeit, die das Gerät benötigt, um die Daten eines eingehenden Teildatenframes an den aktuell ausgesendeten Teildatenframe gerade noch anhängen zu können.

Die rechte Seite der oben genannten Ungleichung beschreibt, dass der Teildatenframe n-1 zum Zeitpunkt $FSO_{IODn}$-1 gesendet wird, wobei als Zeitraum die Zeitdauer $SubframeSize_{IODn}$-1 hinzugefügt wird, also die Zeitdauer, welche zum Senden des Teilframes n-1 benötigt wird. Da der FSO entweder für IODn-1 oder IOD in jeweils lokalen Zeitsystemen bestimmt wird, welches mit einem SyncMaster synchronisiert ist, muss ein sogenannter PeertoPeer Jitter, also ein zeitlicher Versatz zu lokalen Zeitsystemen in den Feldgeräten berücksichtigt werden. Da es bevorzugt ist, dass ein Paket mit Teildatenframes nicht zu spät am benachbarten Feldgerät ankommen darf, um es zeitrichtig anhängen zu können, wird dieser PeertoPeer Jitter von $FSO_{IODI}$-1 subtrahiert.

Die oben genannte Ungleichung kann nun umgewandelt werden zu:

$$MaxDFP\_Feed + MaxLineRxDelay + PeerToPeerJitter - SubframeSize_{IODn-1} \leq FSO_{IODn-1} - FSO_{IODn}$$

MaxDFP_Feed, PeertoPeer Jitter, TxDelay und RxDelay (beides Anteile von MaxLineRxDelay) sind Geräteeigenschaften, welche durch den Hersteller des Feldgerätes vorgegeben sind. Lediglich die Kabellänge, also die daraus bedingte Signallaufzeit, welche Teil von MaxLineRxDelay ist, kann durch den Benutzer konfiguriert werden.

Um nun diese Ungleichung zu erfüllen, ist aus dem Stand der Technik folgende Vorgehensweise bekannt:

Innerhalb einer DFP-Packgruppe beginnen im Wesentlichen alle Feldgeräte zum gleichen Zeitpunkt mit dem Sendevorgang ihrer Teildatenframes. In anderen Worten beträgt FSO für alle Feldgeräte einen identischen Wert, sodass $FSO_{n-1}$ - $FSO_n$ null beträgt. Daraus ergibt sich:

$$MaxDFP\_Feed + MaxLineRxDelay + PeerToPeerJitter - SubframeSize_{IODn-1} \leq 0$$

und daraus

$$SubframeSize \geq \frac{MaxDFP\_Feed + (TxPortDelay + CableDelay + RxPortDelay) + PeerToPeerJitter}{80\ ns}$$

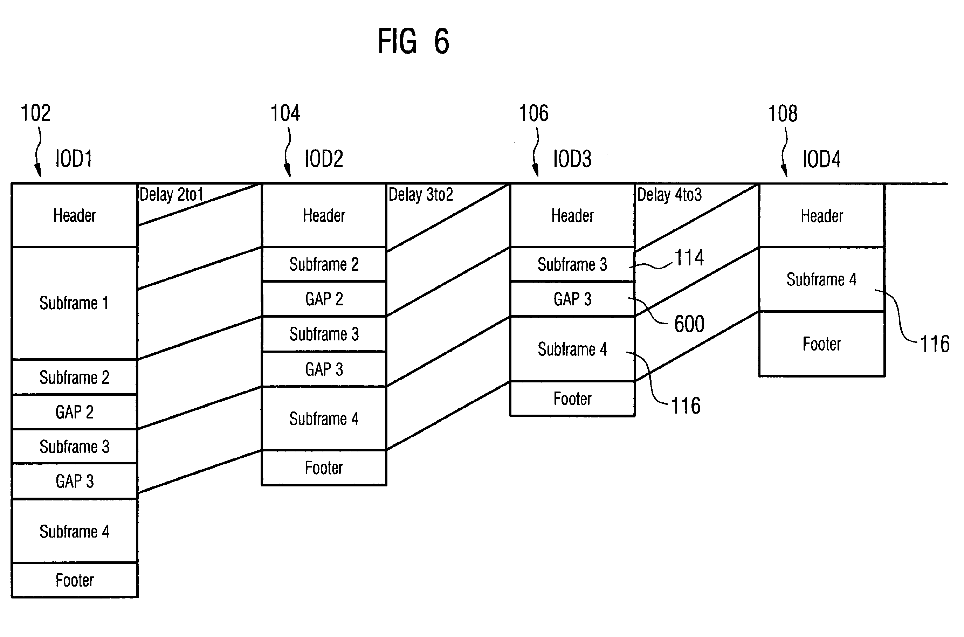

Dies bedeutet Folgendes: Im Falle dessen die tatsächliche reale Teildatenframegröße an einem Feldgerät unterhalb dieses in dieser Formel berechneten Größenwertes liegt, muss die entsprechende Größe des Teildatenframes künstlich erhöht werden. Dies ist beispielhaft in FIG 6 gezeigt:

In der FIG 6 sind alle Feldgeräte 102 - 108 hintereinander geschaltet und weisen denselben FSO-Wert, das heißt denselben Zeitpunkt auf, zu welchem eine Datenübertragung an ein benachbartes Feldgerät begonnen wird. Allerdings ergibt sich in FIG 6 die Problematik, dass der Teildatenframe 116 durch das Feldgerät 106 wesentlich später begonnen wird zu empfangen, als das Feldgerät 106 mit Senden seines Teildatenframes 114 abgeschlossen hat. In anderen Worten ist das Feldgerät 106 mit dem Aussenden des Teildatenframes 114 in Richtung des Feldgeräts 104 fertig, bevor auch nur der Anfang des Teildatenframes 116 vom Feldgerät 108 empfangen wurde. Um dennoch nicht den Teildatenframe 116 in einem separaten Frame an das Feldgerät 104 weiterleiten zu müssen, führt daraufhin entsprechend der oben genannten Gleichung "SubframeSize" das Feldgerät 106 einen Lückenfüller 600 ein, welcher sich somit als Teildatenframe 600 unmittelbar an den Teildatenframe 114 anschließt. Sobald am Feldgerät 106 der Teildatenframe 116 empfangen wird, wird dieser dynamisch an den im Augenblick ausgehenden Teildatenframe 600 angehängt, sodass sich insgesamt der in FIG 6 gezeigte Frame, bestehend aus Header, Teildatenframe 114, Lücke 600, Teildatenframe 116 und Footer, ergibt.

Allerdings hat dies zur Konsequenz, dass in deutlich sichtbarer Weise die Größe des so versendeten Frames zunimmt. Dies erhöht die Menge der zu übertragenden Daten, und ist demnach nicht so performant.

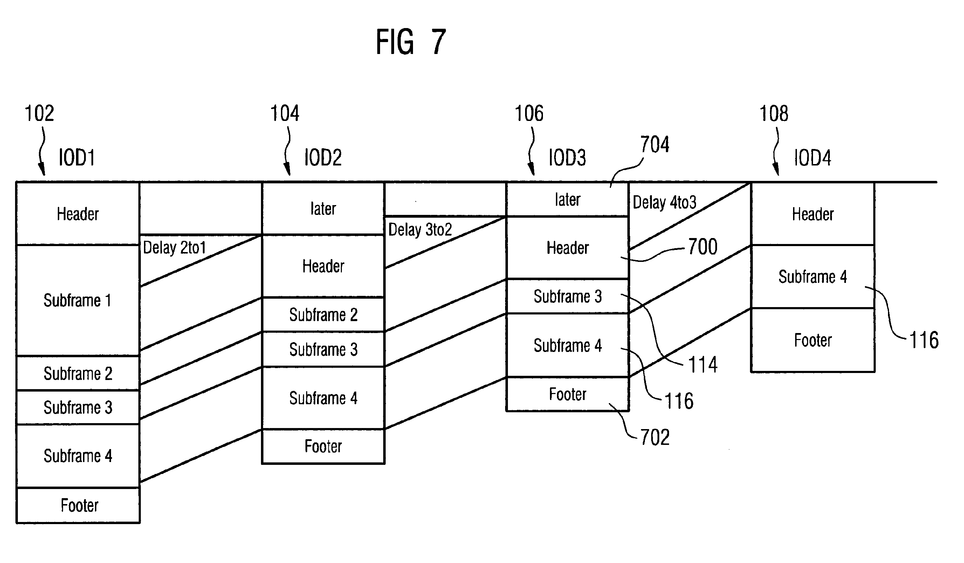

Aus diesem Grund schlägt die vorliegende Erfindung das bezüglich FIG 7 skizzierte Verfahren vor, welches eine Echtzeitdatenübertragung ermöglicht, jedoch nicht das benötigte Datenübertragungsaufkommen erhöht. Anstatt nämlich eine Lücke 600 im Anschluss an den Teildatenframe 114 einzufügen, schlägt die Erfindung vor, den Beginn des Sendezeitpunkts des Frames am Feldgerät 106 um einen Zeitraum 704 so lange zu verzögern, bis der Teildatenframe 116 nahtlos an den Teildatenframe 114 angefügt werden kann. Damit ergibt sich der in FIG 7 bezüglich des Feldgeräts 106 skizzierte Frame, welcher aus Header 700, Teildatenframe 114, Teildatenframe 116 und Footer 702 besteht.

In anderen Worten wird der Sendestart-Zeitpunkt FSO des Feldgeräts $IOD_{n-1}$ (in unserem Beispiel Feldgerät 106) so festgelegt, dass der von diesem Feldgerät ausgesendete Teildatenframe 114 genau dann endet, wenn der Teildatenframe des Feldgerätes $IOD_n$ (in unserem Fall Feldgerät 108) am Feldgerät 106 zur Durchführung von DFP bereitsteht. Es wird also der Teildatenframe 116 unmittelbar an den Teildatenframe 114 ohne Lücke angefügt. In einer Ausführungsform der Erfindung ist es möglich, dass für alle Feldgeräte ein globaler und/oder ein individueller lokaler Sendestart-Offset als Zeitverzögerung vorgegeben wird. Ein solcher Sendestart-Offset besagt, dass ein Beginn der Datenübertragung in einem Feldgerät gegenüber dem Beginn der Datenübertragung in einem benachbarten Feldgerät zumindest um diesen Sendestart-Offset verzögert ist, um die Übertragung immer in einem für Echtzeitkommunikation reservierten Zeitabschnitt im Netzwerk stattfinden zu lassen.

Wird beispielsweise ein für alle Feldgeräte gültiger Sendestart-Offset (Global Start Offset) vorgesehen, so sollte ein jeweiliger Sendepunkt an den Feldgeräten 102 - 108 nicht vor Ablauf dieses Sendestart-Offsets-Zeitraums stattfinden. Dies kann durch die folgende Formel ausgedrückt werden:

$$FSO_{IODn-1} = MAX(FSO_{IODn} + MaxDFP\_Feed + MaxLineRxDelay + PeerToPeerJitter - SubframeSize_{IODn-1};$$
$$GlobalStartOffset)$$

Im Spezialfall, dass die Größe des Teildatenframes von $IOD_{n-1}$ größer ist als die Summe von MaxDFP_Feed, MaxLineRXDelay und PeertoPeer Jitter, sollte der FSO des IODn-1 gleich sein oder vorverlegt werden im Vergleich zum FSO am $IOD_n$. In anderen Worten wird in diesem Spezialfall, bei dem die Summe von Übertragungsdauer, zeitlichem Versatz der lokalen Zeitsysteme und der Vorlaufzeit zur Durchführung des Dynamic Frame Packing größer ist als die Zeitdauer zum Senden des jeweiligen Teildatenframes, der verwendete Zeitversatz 704 negativ.

Damit ergibt sich zusammengefasst die Möglichkeit der Berechnung eines optimalen Absendezeitpunkts für zu versendende Teildatenframes. Es werden keine Lückenframes zusätzlich an Teildatenframes angehängt, sodass die Gesamtgröße der versendeten Frames so klein wie möglich gehalten wird.

Als praktisches Beispiel sei hier ein Kette von ET 200 ecoPN 8DI erwähnt, einer Blockperipherie in IP67 mit PROFINET-Anbindung, die jeweils 8 Byte an Subframegröße benötigen.

Setzt man die für den ERTEC200+ bekannten Zeiten für MaxDFP_Feed und MaxLineRxDelay ein und nimmt eine Kabellänge von 100 m an, benötigt man für die Umsetzung der in FIG 6 diskutierten Vorgehensweise eine minimale Subframegröße von 15 Byte, wenn ein PeerToPeerJitter von 100 ns erreicht werden kann. Ist der PeerToPeerJitter größer (z.B. 300 ns), so ist nur eine minimale Subframegröße von 18 Byte erreichbar.

Daher würde bei einer Umsetzung der in FIG 6 diskutierten Vorgehensweise pro Subframe einer ecoPN in einer Packgruppe 8 Byte Lücke benötigt. Diese Lücke "GAP" kann weiter vorne in der Linie nicht mehr kompensiert werden. Daher benötigt der IO Controller pro ecoPN prinzipiell zwischen 6 * 80 ns = 560 ns und 10 * 8 = 800 ns (je nach erreichbaren PeerToPeerJitter) mehr an Empfangszeit für das DFP frame, als eigentlich ohne GAP notwendig wäre.

Bei einer Umsetzung der in FIG 6 diskutierten Vorgehensweise wird zwar der upstream Nachbar eines Devices mit Subframegröße unterhalb der 15 - 18 Byte um diese Zeit später "gescheduled"; diese Zeit ist aber durch weitere Devices Downstream, welche eine Subframegröße größer als 15 - 18 Bytes haben (z.B. Antriebe, modulare Devices wie ET200S oder ET200M) kompensiert, so dass das Frame am IO Controller insgesamt kleiner ist.

**Patentansprüche**

1. Verfahren zur Datenübertragung in einem Automatisierungssystem von einem zweiten Feldgerät (102 - 108) über ein erstes Feldgerät (102 - 108) zu einem Empfänger (100), wobei das Verfahren die folgenden Schritte am ersten Feldgerät (102 - 108) umfasst:

- Erzeugung eines ersten Teildatenframes (110 - 116), wobei der erste Teildatenframe (110 - 116) Prozessdaten des ersten Feldgeräts (102 - 108) aufweist,
- Empfang eines zweiten Datenframes von dem zweiten Feldgerät (102 - 108), wobei der zweite Datenframe einen zweiten Teildatenframe (110 - 116) mit Prozessdaten des zweiten Feldgeräts (102 - 108) aufweist,
- zeitrichtiges Senden eines ersten Datenframes umfassend den ersten und den zweiten Teildatenframe (110 - 116) durch Dynamic Frame Packing an den Empfänger (100),

wobei durch das zeitrichtige Senden im Fall, dass der zweite Teildatenframe (110 - 116) nicht spätestens nach Senden des ersten Teildatenframes (110 - 116) unmittelbar an den ersten Teildatenframe (110 - 116) angehängt werden kann, das Senden des ersten Datenframes um einen Zeitwert verschoben wird, wobei der Zeitwert so berechnet wird, dass unmittelbar nach dem Senden des ersten Teildatenframes (110 - 116) der zweite Teildatenframe (110 - 116) unmittelbar an den ersten Teildatenframe (110 - 116) anhängbar wird.

2. Verfahren nach Anspruch 1, wobei in die Berechnung des Zeitwerts die Übertragungsdauer des zweiten Datenframes von dem zweiten zu dem ersten Feldgerät (102 - 108) eingeht.

3. Verfahren nach Anspruch 2, wobei die Übertragungsdauer eine Zeitverzögerung zum Senden des zweiten Datenframes durch das zweite Feldgerät (102 - 108) und/oder eine Zeitverzögerung beim Empfangen des zweiten Datenframes durch das erste Feldgerät (102 - 108) und/oder eine Zeitverzögerung durch die Kabellaufzeit des zweiten Datenframes zwischen dem zweiten und ersten Feldgerät (102 - 108) umfasst.

4. Verfahren nach Anspruch 1, wobei in die Berechnung des Zeitwerts die Vorlaufzeit zur Durchführung des Dynamic Frame Packing am ersten Feldgerät (102 - 108) eingeht.

5. Verfahren nach Anspruch 1, wobei in die Berechnung des Zeitwerts der zeitliche Versatz der lokalen Zeitsysteme im ersten und zweiten Feldgerät (102 - 108) eingeht.

6. Verfahren nach Anspruch 1, wobei der erste Datenframe über ein weiteres Feldgerät (102 - 108) an den Empfänger (100) gesendet wird, wobei eine Datenübertragung aller Feldgeräte (102 - 108) zeitlich synchronisiert stattfindet, wobei für alle Feldgeräte (102 - 108) ein globaler und/oder ein individueller lokaler Sendestartoffset (GlobalStartOffset) als Zeitverzögerung vorgegeben ist, wobei ein Beginn der Datenübertragung an einem Feldgerät (102 - 108) gegenüber dem Beginn der Datenübertragung an einem benachbarten Feldgerät (102 - 108) zumindest um den Sendestartoffset verzögert ist, wobei das Senden des ersten Datenframes durch das erste Feldgerät (102 - 108) frühestens nach Ablauf des Sendestartoffsets stattfindet.

7. Verfahren nach Anspruch 1, wobei im Fall, dass die Summe von

- der Übertragungsdauer des zweiten Datenframes von dem zweiten zu dem ersten Feldgerät (102 - 108) und/oder
- dem zeitlichen Versatz der lokalen Zeitsysteme im ersten und zweiten Feldgerät (102 - 108) und/oder
- der Vorlaufzeit zur Durchführung des Dynamic Frame Packing am ersten Feldgerät (102 - 108)

größer ist als die Zeitdauer zum Senden des gesamten ersten Teildatenframes (110 - 116), der Zeitwert negativ wird.

8. Verfahren nach einem der vorigen Ansprüche, wobei sich der Zeitwert aus der Summe errechnet von

- Übertragungsdauer des zweiten Datenframes von dem zweiten zu dem ersten Feldgerät (102 - 108),
- zeitlichem Versatz der lokalen Zeitsysteme im ersten und zweiten Feldgerät (102 - 108) und/oder
- Vorlaufzeit zur Durchführung des Dynamic Frame Packing am ersten Feldgerät (102 - 108) und/oder
- einem Zeitwert, um welchen das Senden des zweiten Datenframes am zweiten Feldgerät (102 - 108) zum Zweck des zeitrichtigen Sendens verzögert wurde,

abzüglich der Zeitdauer zum Senden des gesamten ersten Teildatenframes (110 - 116).

9. Verfahren nach Anspruch 8, wobei im Fall der errechnete Zeitwert kleiner ist als der Sendestartoffset des ersten Feldgeräts (102 - 108) der Sendestartoffset des ersten Feldgeräts (102 - 108) als Zeitwert verwendet wird.

10. Computerprogrammprodukt mit von einem Prozessor ausführbaren Instruktionen zur Durchführung der Verfahrensschritte gemäß den vorigen Ansprüchen.

**11.** Erstes Feldgerät (102 - 108), wobei das erste Feldgerät (102 - 108) zum Empfang von Daten von einem zweiten Feldgerät (102 - 108) und zum Senden von Daten an einen Empfänger (100) ausgebildet ist, wobei das erste Feldgerät (102 - 108) zur Durchführung der folgenden Schritte ausgebildet ist:

- Erzeugung eines ersten Teildatenframes (110 - 116), wobei der erste Teildatenframe (110 - 116) Prozessdaten des ersten Feldgeräts (102 - 108) aufweist,
- Empfang eines zweiten Datenframes von dem zweiten Feldgerät (102 - 108), wobei der zweite Datenframe einen zweiten Teildatenframe (110 - 116) mit Prozessdaten des zweiten Feldgeräts (102 - 108) aufweist,
- zeitrichtiges Senden eines ersten Datenframes umfassend den ersten und den zweiten Teildatenframe (110 - 116) durch Dynamic Frame Packing an den Empfänger (100),

wobei durch das zeitrichtige Senden im Fall, dass der zweite Teildatenframe (110 - 116) nicht spätestens nach Senden des ersten Teildatenframes (110 - 116) unmittelbar an den ersten Teildatenframe (110 - 116) angehängt werden kann, das Senden des ersten Datenframes um einen Zeitwert verschoben wird, wobei der Zeitwert so berechnet wird, dass unmittelbar nach dem Senden des ersten Teildatenframes (110 - 116) der zweite Teildatenframe (110 - 116) unmittelbar an den ersten Teildatenframe (110 - 116) anhängbar wird.

## Claims

**1.** Method for data transmission in an automation system from a second field device (102 - 108) via a first field device (102

- 108) to a receiver (100), wherein the method comprises the following steps at the first field device (102 - 108):
- creation of a first data subframe (110 - 116), wherein the first data subframe (110 - 116) comprises process data of the first field device (102 - 108),
- receipt of a second data frame from the second field device (102 - 108), wherein the second data frame includes a second data subframe (110 - 116) with process data of the second field device (102 - 108),
- correctly-timed sending to the receiver (100) of a first data frame comprising the first and the second data subframe (110 - 116) by Dynamic Frame Packing,

wherein, by correctly-timed sending in the event of the second data subframe (110 - 116) not being able to be appended directly to the first data subframe (110 - 116) at the latest after the sending of the first data subframe (110 - 116), the sending of the first data frame is shifted by a time value, wherein the time value is calculated so that immediately after the sending of the first data subframe (110 - 116) the second data subframe (110 - 116) is able to be appended directly to the first data subframe (110 - 116).

**2.** Method according to claim 1, wherein the transmission time of the second data frame from the second to the first field device (102 - 108) is included in the calculation of the time value.

**3.** Method according to claim 2, wherein the transmission time comprises a time delay for sending the second data frame by the second field device (102 - 108) and/or a time delay for receipt of the second data frame by the first field device (102 - 108) and/or a time delay by the cable delay time of the second data frame between the second and first field device (102 - 108).

**4.** Method according to claim 1, wherein the lead time for carrying out the Dynamic Frame Packing at the first field device (102 - 108) is included in the calculation of the time value.

**5.** Method according to claim 1, wherein the time offset of the local time systems in the first and second field device (102 - 108) is included in the calculation of the time value.

**6.** Method according to claim 1, wherein the first data frame is sent via a further field device (102 - 108) to the receiver (100), wherein the data transmission of all field devices (102 - 108) takes place in a time-synchronized manner, wherein for all field devices (102 - 108) a global and/or an individual local send start offset (GlobalStartOffset) is predetermined as time delay, wherein a beginning of the data transmission at a field device (102 - 108) is delayed in relation to the beginning of the data transmission at a neighbouring field device (102 - 108) at least by the send start offset, wherein the sending of the first data frame by the first field device (102 - 108) takes place at the earliest after the send start offset has elapsed.

7.  Method according to claim 1, wherein, in the event of the sum of

      - the transmission duration of the second data frame from the second to the first field device (102 - 108) and/or
      - the time offset of the local time systems in the first and second field device (102 - 108) and/or
      - the lead time for carrying out the Dynamic Frame Packing at the first field device (102 - 108)

    being greater than the time for sending the entire first data subframe (110 - 116), the time value becomes negative.

8.  Method according to one of the previous claims, wherein the time value is calculated from the sum of

      - the transmission duration of the second data frame from the second to the first field device (102 - 108),
      - time offset of the local time systems in the first and second field device (102 - 108) and/or
      - lead time for carrying out the Dynamic Frame Packing at the first field device (102 - 108) and/or
      - a time value by which the sending of the second data frame at the second field device (102 - 108) was delayed for the purposes of correctly-timed sending,

    minus the time for sending the entire first data subframe (110 - 116).

9.  Method according to claim 8, wherein, in the event of the calculated time value being smaller than the send start offset of the first field device (102 - 108), the send start offset of the first field device (102 - 108) is used as the time value.

10. Computer program product with instructions able to be executed by a processor for carrying out the method steps in accordance with the preceding claims.

11. First field device (102 - 108), wherein the first field device (102 - 108) is embodied for receiving data from a second field device (102 - 108) and for sending data to a receiver (100), wherein the first field device (102 - 108) is embodied for performing the following steps:

      - Creation of a first data subframe (110 - 116), wherein the first data subframe (110 - 116) has process data of the first field device (102 - 108),
      - Receipt of a second data frame from the second field device (102 - 108), wherein the second data frame has a second data subframe (110 - 116) with process data of the second field device (102 - 108),
      - Correctly-timed sending to the receiver (100) of a first data frame including the first and the second data subframe (110 - 116) by Dynamic Frame Packing,

    wherein, by the correctly-timed sending, in the event of the second data subframe (110 - 116) not being able to be appended directly to the first data subframe (110 - 116) at the latest after the sending of the first data subframe (110 - 116), the sending of the first data frame is shifted by a time value, wherein the time value is calculated so that immediately after the sending of the first data subframe (110 - 116), the second data subframe (110 - 116) is able to be appended directly to the first data subframe (110 - 116).

**Revendications**

1.  Procédé de transmission de données dans un système d'automatisation d'un deuxième appareil ( 102 à 108 ) de terrain à un récepteur ( 100 ) en passant par un premier appareil ( 102 à 108 ) de terrain, le procédé comprenant les stades suivants au premier appareil ( 102 à 108 ) de terrain :

      - production d'une première trame ( 110 à 116 ) de données partielle, la première trame ( 110 à 116 ) de données partielle ayant des données de processus du premier appareil ( 102 à 108 ) de terrain,
      - la production d'une deuxième trame de données par le deuxième appareil ( 102 à 108 ) de terrain, la deuxième trame de données ayant une deuxième trame ( 110 à 116 ) de données partielle ayant des données de processus du deuxième appareil ( 102 à 108 ) de terrain,
      - l'envoi au bon moment d'une première trame de données comprenant la première et la deuxième trame ( 110 à 116 ) de données partielle par Dynamic Frame Backing au récepteur ( 100 ),

dans lequel par l'envoi au bon moment dans le cas où la deuxième trame ( 110 à 116 ) de données partielle peut être rattachée, pas plus tard qu'après l'envoi de la première trame ( 10 à 116 ) de données partielle, directement à la première trame ( 110 à 116 ) de données partielle, l'envoi de la première trame de données est décalée d'une valeur de temps, la valeur de temps étant calculée de manière à ce que, immédiatement après l'envoi de la première trame ( 110 à 116 ) de données partielle, la deuxième trame ( 110 à 116 ) de données partielle puisse être rattachée immédiatement à la première trame ( 110 à 116 ) de données partielle.

2. Procédé suivant la revendication 1, dans lequel la durée de transmission de la deuxième trame de données du deuxième au premier appareil ( 102 à 108 ) de terrain entre dans le calcul de la valeur de temps.

3. Procédé suivant la revendication 2, dans lequel la durée de transmission comprend un retard dans le temps pour l'envoi de la deuxième trame de données par un deuxième appareil ( 102 à 108 ) de terrain et/ou un retard dans le temps à la réception de la deuxième trame de données par le premier appareil ( 102 à 108 ) de terrain et/ou un retard dans le temps par la durée du retard de ligne de la deuxième trame de données entre le deuxième et le premier appareil ( 102 à 108 ) de terrain.

4. Procédé suivant la revendication 1, dans lequel dans le temps d'amorçage pour effectuer le Dynamic Frame Backing au premier appareil ( 102 à 108 ) de terrain entre le calcul de la valeur de temps.

5. Procédé suivant la revendication 1, dans lequel le décalage dans le temps des systèmes de temps locaux dans le premier et le deuxième appareil ( 102 à 108 ) de terrain entre dans le calcul de la valeur du temps.

6. Procédé suivant la revendication 1, dans lequel la première trame de données est envoyée au récepteur ( 100 ) par un autre appareil ( 102 à 108 ) de terrain, une transmission de données entre tous les appareils ( 102 à 108 ) de terrain ayant lieu d'une manière synchronisée dans le temps, dans lequel pour tous les appareils ( 102 à 108 ) de terrain est prescrit comme retard dans le temps un décalage de début d'envoi global et/ou local ( GlobalStarOffset ), un début de la transmission de données à un appareil ( 102 à 108 ) de terrain étant retardé par rapport au début de la transmission de données à un appareil ( 102 à 108 ) de terrain voisin, au moins du décalage de début d'envoi, l'envoi de la première trame de données ayant lieu par le premier appareil ( 102 à 108 ) de terrain au plus tôt après l'expiration du décalage de début d'envoi.

7. Procédé suivant la revendication 1, dans lequel dans le cas où la somme de :

- la durée de transmission de la deuxième trame de données du deuxième au premier appareil ( 102 à 108 ) de terrain et/ou
- le décalage dans le temps des systèmes de temps locaux dans le premier et le deuxième appareil ( 102 à 108 ) de terrain et/ou
- le temps d'amorçage pour effectuer le Dynamic Frame Backing au premier appareil ( 102 à 108 ) de terrain,

est plus grande que la durée de l'envoi de toute la première trame ( 110 à 116 ) de données partielle, la valeur de temps est négative.

8. Procédé suivant l'une des revendications précédentes, dans lequel la valeur de temps est calculée à partir de la somme de :

- la durée de transmission de la deuxième trame de données du deuxième au premier appareil ( 102 à 108 ) de terrain,
- le décalage dans le temps des systèmes de temps locaux dans le premier et le deuxième appareil ( 102 à 108 ) de terrain et/ou le temps d'amorçage pour effectuer le Dynamic Frame Backing au premier appareil ( 102 à 108 ) de terrain et/ou
- une valeur de temps, dont l'envoi de la deuxième trame de données au deuxième appareil ( 102 à 108 ) de terrain a été retardé en vue de l'envoi au bon moment,

diminuée de la durée de l'envoi de toute la première trame ( 110 à 116 ) de données partielle.

9. Procédé suivant la revendication 8, dans lequel, dans le cas où la valeur de temps calculée est plus petite que le décalage de début d'envoi du premier appareil ( 102 à 108 ) de terrain, le décalage de début d'envoi du premier appareil ( 102 à 108 ) de terrain est utilisé comme valeur de temps.

10. Produit de programme informatique comprenant des instructions pouvant être exécutées par un processeur pour effectuer les stades du procédé suivant les revendications précédentes.

11. Premier appareil ( 102 à 108 ) de terrain, le premier appareil ( 102 à 108 ) de terrain étant constitué pour la réception de données d'un deuxième appareil ( 102 à 108 ) de terrain et pour l'envoi de données à un récepteur ( 100 ), le premier appareil ( 102 à 108 ) de terrain étant constitué pour effectuer les stades suivants :

- la production d'une première trame ( 110 à 116 ) de données partielle, la première trame ( 110 à 116 ) de données partielle ayant des données de processus du premier appareil ( 102 à 108 ) de terrain,
- la production d'une deuxième trame de données par le deuxième appareil ( 102 à 108 ) de terrain, la deuxième trame de données ayant une deuxième trame ( 110 à 116 ) de données partielle ayant des données de processus du deuxième appareil ( 102 à 108 ) de terrain,
- l'envoi au bon moment d'une première trame de données comprenant la première et la deuxième trame ( 110 à 116 ) de données partielle par Dynamic Frame Backing au récepteur ( 100 ),

dans lequel par l'envoi au bon moment dans le cas où la deuxième trame ( 110 à 116 ) de données partielle peut être rattachée, pas plus tard qu'après l'envoi de la première trame ( 110 à 116 ) de données partielle, immédiatement à la première trame ( 110 à 116 ) de données partielle, l'envoi de la première trame de données est décalé d'une valeur de temps, la valeur de temps étant calculée de manière à ce que, immédiatement après l'envoi de la première trame ( 110 à 116 ) de données partielle, la deuxième trame ( 110 à 116 ) de données partielle puisse être attachée immédiatement à la première trame ( 110 à 116 ) de données partielle.

## FIG 1

| Destination addr 6 Byte |
| Source addr 6 Byte |
| Ethertype 2 Byte |
| Priority / VLAN 2 Byte |
| Ethertype 2 Byte |
| Frame ID 2 Byte |
| C_SDU 40 - 1440 Byte |
| APDU Status 4 Byte |
| CRC 4 Byte |

## FIG 2

| Frame ID |
| CRC |

Subframe — 110
| SFPosition |
| SFDataLength |
| SFCycleCounter |
| Data Status |
| C_SDU 1 - 255 Byte |
| CRC |

⋮

Subframe — 112
| SFPosition |
| SFDataLength |
| SFCycleCounter |
| Data Status |
| C_SDU 1 - 255 Byte |
| CRC |

Termination
| SFPosition = 0 |
| SFDataLength = 0 |

| APDU Status |

▦ Ethernet Encapsulation according to RFC 894

▥ Priority Tagging according to IEEE 802.1Q (optional)

☐ RT Frame according to IEC 61158-6-10

# FIG 3

EP 2 466 803 B1

# FIG 4

| H | Ethernet Header |

| T | Ethernet Trailer |

IOC ⟋ 100

IOD1 ⟋ 102    IOD2 ⟋ 104    IOD3 ⟋ 106    IOD4 ⟋ 108

| H 1 | | | T 1 |

116

| H 2 | | | | T 2 |

114  116

| H 3 | | | | T 3 |

112  114  116

110  112  114  116

Input

| H 4 | | | | T 4 |

EP 2 466 803 B1

# FIG 5

# FIG 6

EP 2 466 803 B1

# FIG 7

**EP 2 466 803 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2028797 A1
- DE 102007004044 A1
- EP 2109259 A1